# EUROPÄISCHE PATENTSCHRIFT

(11) **EP 0 824 412 B1**
(45) Veröffentlichungstag und Bekanntmachung des Hinweises auf die Patenterteilung: **22.09.1999**
(21) Anmeldenummer: 95935955.5
(22) Anmeldetag: 20.10.1995
(51) Int. Cl.: B60G 17/08, B60G 21/06, F16F 9/34

(54) **HYDROPNEUMATISCHES FEDERUNGSSYSTEM**
HYDROPNEUMATIC SUSPENSION
SUSPENSION HYDROPNEUMATIQUE

(30) Priorität: 26.04.1995 DE 19515295
(43) Veröffentlichungstag der Anmeldung: 25.02.1998
(73) Patentinhaber: HEMSCHEIDT FAHRWERKTECHNIK GmbH & Co., 42781 Haan (DE)
(72) Erfinder: RUNKEL, Walter, D-42289 Wuppertal (DE)
(74) Vertreter: Zapf, Christoph, Dipl.-Ing.
(86) Internationale Anmeldenummer: EP9504125
(87) Internationale Veröffentlichungsnummer: WO9633879

(56) Entgegenhaltungen:
- DE-A- 3 427 508
- DE-A- 4 129 819
- DE-A- 4 242 534
- DE-U- 9 407 167
- FR-A- 1 256 864
- US-A- 3 356 954
- US-A- 3 672 628
- US-A- 4 014 510
- PATENT ABSTRACTS OF JAPAN vol. 015 no. 060 (C-0805) ,13.Februar 1991 & JP,A,02 289419 (RES ASSOC RESIDUAL OIL PROCESS) 29.November 1990,

## Beschreibung

Die vorliegende Erfindung betrifft ein hydropneumatisches Federungssystem, insbesondere zur Radabstützung bei Kraftfahrzeugen, mit mindestens einer Federanordnung, die mindestens ein hydraulisches Federbein, mindestens einen hydropneumatischen Federspeicher und mindestens ein Dämpfungsventil umfaßt, wobei das Federbein aus einem ein Hydraulikmedium enthaltenden Zylinder und einem darin zum Ein- und Ausfedern beweglich geführten Kolben besteht und der Kolben einen Zylinderraum von einem eine Kolbenstange umschließenden Ringraum trennt, und wobei der Zylinderraum über das Dämpfungsventil zur Erzeugung einer Federkraft mit dem Federspeicher verbunden ist, wobei das Dämpfungsventil derart ausgebildet ist, daß eine beim Ausfedern des Federbeins auftretende und über einen Strömungsweg des Dämpfungsventils geführte Hydraulik-Ausfederungsströmung dadurch gedämpft wird, daß der Strömungsweg mittels eines Ventilelementes ständig alternierend geschlossen und wieder geöffnet wird, und wobei das Ventilelement zur Variation der Dämpfungscharakteristik mit Steuerdruck beaufschlagbar ist.

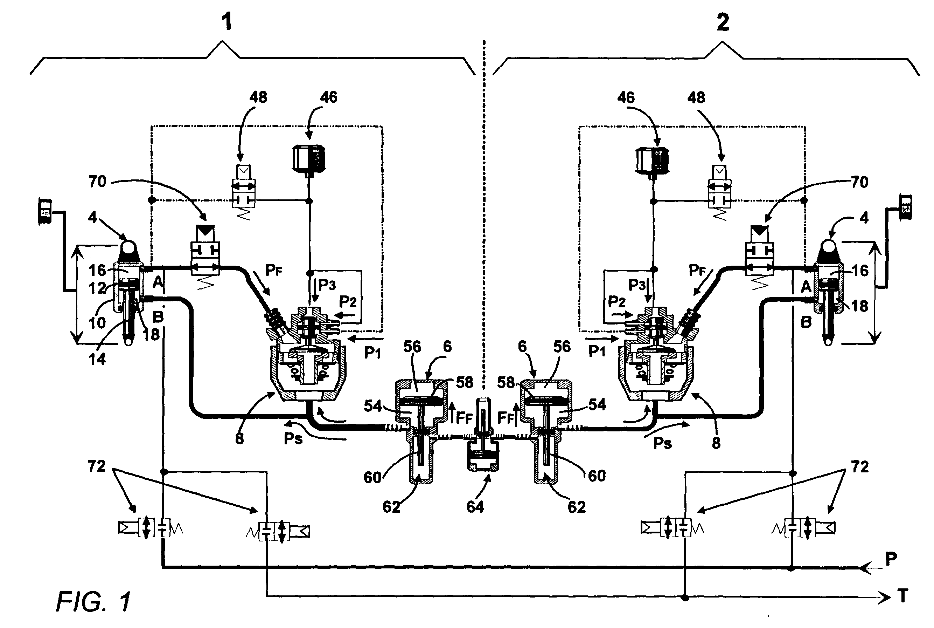

Ein derartiges Federungssystem ist in der europäischen Patentschrift EP 0 515 991 B1 beschrieben. Dieses bekannte System hat sich bereits recht gut bewährt, und zwar insbesondere deshalb, weil es nach dem neuartigen Prinzip einer "Stotterdämpfung" arbeitet (vgl. hierzu auch das deutsche Patent DE 41 17 455 C2), wobei beim Ausfedern des Federbeins innerhalb des Dämpfungsventils ein Strömungsweg für das Hydraulikmedium ständig alternierend gesperrt und wieder geöffnet wird. Hierdurch wird das für die meisten Anwendungsfälle schädliche schnelle Nachschieben des Federbeins in Ausfederungsrichtung wirksam verhindert, indem während des Ausfederns ein gesteuertes, dosiertes, sukzessives "Nachlassen" von Hydraulikmedium aus dem Federspeicher in das Federbein erfolgt, bis die Ausfederungsbewegung ganz beendet ist. Somit wird ein schädliches, zu schnelles Rückfedern bzw. Rückschlagen des Rades auf die Fahrbahn vermieden. Zudem ist gemäß EP 0 515 991 B1 (Fig.1 und 7) zu diesem Zweck vorgesehen, daß auch der Ringraum jedes Federbeins - gegebenenfalls über ein zusätzliches Dämpfungsventil (Fig. 11) - mit einem zusätzlichen Druckspeicher verbunden ist, so daß der durch den Federspeicher im Zylinderraum erzeugten Federkraft ringraumseitig stets eine bestimmte Gegenkraft entgegenwirkt. In einer alternativen Ausführungsform (Fig. 12) sind der Zylinderraum und der Ringraum über jeweils eines von zwei Dämpfungsventilen mit dem gleichen Federspeicher verbunden. Alle diese Maßnahmen führen zu einem recht großen Aufwand an Bauteilen (Speicher, Dämpfungsventile). Als Steuerdruck wird dabei vorzugsweise jeweils der hydraulische Druck eines in einem Fahrzeug auf der gegenüberliegenden Seite angeordneten Federbeins verwendet. Hierdurch wird aber eine sich im Fahrbetrieb ständig relativ unkontrolliert ändernde Dämpfung erreicht, weil sich der Druck im Federbein ja bei den "normalen" Federungsbewegungen ständig dynamisch ändert.

In dem Dokument FR-A-1 256 864 bzw. der parallelen GB-A-890 089 wird ein anderes Dämpfungsprinzip behandelt, und zwar eine übliche Dämpfung durch Drosselwirkung. Zudem ergibt sich aus diesem Dokument keine Dämpfungsverstellbarkeit durch Beaufschlagung der Dämpfungsventile mit Steuerdruck.

Das Dokument DE-A-34 27 508 ist noch ferner liegend, denn die dort vorgesehenen Flüssigkeitsspeicher dienen allein zum Volumenausgleich für das bei den Federungsbewegungen jeweils verdrängte Hydraulikmedium, nicht aber zur Erzeugung der eigentlichen Feder- bzw. Tragkraft. Vielmehr sind zu diesem Zweck mechanische Federn vorgesehen, die nur in der Zeichnung nicht dargestellt sind. Die Drosselventile arbeiten nach dem früher üblichen Drosselprinzip, und schließlich ist auch keine Steuerdruck-Beaufschlagung der Drosselventile zur Dämpfungsvariation beschrieben.

Der vorliegenden Erfindung liegt die Aufgabe zugrunde, das bekannte, gattungsgemäße System weitergehend so zu verbessern, daß bei reduziertem Aufwand für Systemkomponenten zumindest gleichbleibend gute, insbesondere aber verbesserte Gebrauchseigenschaften vor allem bezüglich der Stabilisierung des Fahrzeuges gegen seitliches Wanken um die Fahrzeug-Längsachse (z.B. bei Kurvenfahrt) und/oder gegen Kipp- bzw. "Nicken" um die Fahrzeug-Querachse (z.B. beim Bremsen) erreicht werden können.

Erfindungsgemäß wird dies dadurch erreicht, daß der Ringraum des Federbeins direkt, unter Umgehung des Dämpfungsventils mit dem bzw. einem der die jeweilige Federkraft bewirkenden Federspeicher verbunden ist, wobei als Steuerdruck zumindest unter anderem der in einem zusätzlichen Druckspeicher gekammerte, statische Druck des Zylinderraumes bzw. eines der Zylinderräume verwendet wird.

Durch diese erfindungsgemäße Lösung kann mit geringstmöglicher Anzahl von Systemkomponenten (pro Federbein ist nur ein Federspeicher und nur ein Dämpfungsventil erforderlich) eine sehr wirksame Stabilisierung erreicht werden. Denn im dynamischen Zustand, insbesondere beim Ausfedern des Federbeins, tritt aufgrund der erfindungsgemäßen "Ringraum-Schaltung" ein Druckunterschied zwischen Zylinderraum und Ringraum auf. Dies liegt daran, daß das in den Zylinderraum strömende Hydraulikmedium über das einen "Strömungswiderstand" darstellende Dämpfungsventil fließt, während gleichzeitig Hydraulikmedium aus dem Ringraum nahezu strömungsverlustfrei in den Federspeicher strömt, da in der Verbindung vom Ringraum zum Federspeicher - abgesehen von geringen Strömungsverlusten in den Leitungen - keine druckbeeinflussenden Elemente vorhanden sind. Hierdurch herrscht im Ringraum praktisch der Speicherdruck, während im Zylinderraum - bedingt durch das Dämpfungsventil - eine Druckabsenkung stattfindet. Der höhere Ringraum-Druck bewirkt so vorteilhafterweise eine "Bremskraft" gegen die Ausfederungsrichtung, was zur Stabilisierung beiträgt und auch eine positive Voraussetzung für weitere vorteilhafte Stabilisierungsmaßnahmen ist, die im folgenden noch genauer erläutert werden sollen.

Im Zusammenhang mit der Erfindung wird das an sich bekannte Prinzip der "Stotterdämpfung" sowie insbesondere auch eine spezielle Zusammenschaltung von jeweils mindestens zwei Federanordnungen innerhalb eines Fahrzeugs eingesetzt, so daß an dieser Stelle auf die sich mit diesen Merkmalskomplexen beschäftigenden Veröffentlichungen DE 41 17 455, DE 41 29 819, EP 0 515 991 sowie auch DE 42 42 534 und DE 43 14 021 in vollem Umfang Bezug genommen wird.

Erfindungsgemäß ist es ferner wesentlich, daß als Steuerdruck - zumindest anteilig - der in einem zusätzlichen Druckspeicher gekammerte, statische Druck des Zylinderraumes (bzw. eines der Zylinderräume) verwendet wird. In der statischen, d. h. ohne Federungsbewegungen stillstehenden Lage des jeweiligen Federbeins wird der dann in seinem Zylinderraum herrschende, allein lastabhängige Druck in dem zusätzlichen Druckspeicher gespeichert, so daß er später auch im dynamischen Federungsbetrieb der jeweiligen Last angepaßt konstant bleibt. Durch diese erfindungsgemäße Maßnahme läßt sich im Zusammenwirken mit der erfindungsgemäßen Ringraum-Beschaltung und in Zusammenwirkung mit der speziellen "Stotterdämpfung" erreichen, daß durch einen besonders deutlichen Druckabfall im Zylinderraum gegenüber dem Ringraum eine sehr effektive Stabilisierung des Fahrzeuges, z. B. gegen Wankbewegungen erreicht werden kann. Dabei gibt es mehrere verschiedene Möglichkeiten für eine spezielle Steuerdruck-Beschaltung, wozu einerseits auf den Anspruch 6 sowie andererseits auf die Ansprüche 7 und 10 i.V.m. der anschließenden Beschreibung verwiesen wird.

Im übrigen sind vorteilhafte Ausgestaltungen sowie Ausführungs- und Anwendungsvarianten der Erfindung in den Unteransprüchen und in der nachfolgenden Beschreibung enthalten.

Anhand der Zeichnung soll nun die Erfindung beispielhaft näher erläutert werden. Dabei zeigen:
- Fig. 1: ein erstes Ausführungsbeispiel eines erfindungsgemäßen Federungssystems mit zwei insbesondere auf gegenüberliegenden Seiten einer Fahrzeugachse angeordneten Federanordnungen mit Federbeinen und zugehörigen Federspeichern und Dämpfungsventilen, wobei die Einzelkomponenten jeweils in prinzipiellen, stark vereinfachten Längsschnitten dargestellt sind,
- Fig. 2: ein zweites Ausführungsbeispiel des erfindungsgemäßen Federungssystems in einer Darstellung analog zu Fig. 1,
- Fig. 3: eine entsprechende Darstellung eines dritten Ausführungsbeispiels des erfindungsgemäßen Federungssystems,
- Fig. 4: eine vierte Ausführungsform des erfindungsgemäßen Federungssystems,
- Fig. 5: eine gegenüber Fig. 1 bis 4 vergrößerte Darstellung einer bevorzugten Ausführungsform eines im Zusammenhang mit dem erfindungsgemäßen Federungssystem verwendeten Dämpfungsventils,
- Fig. 5a: eine gesondere Darstellung eines Einzelteils des Dämpfungsventils, und zwar eines Steuerstößels, und
- Fig. 6: eine weitere Ausführungssform des erfindungsgemäßen Federungssystems in einer Darstellung analog zu Fig. 1.

In den verschiedenen Zeichnungsfiguren sind gleiche bzw. sich funktionell entsprechende Teile und Komponenten stets mit den gleichen Bezugsziffern bezeichnet und werden daher in der Regel jeweils nur einmal beschrieben.

In jeder der Fig. 1 bis 4 sowie 6 ist beispielshaft ein erfindungsgemäßes Federungssystem mit zwei Federanordnungen 1,2 dargestellt, die vorzugsweise über spezielle, im folgenden noch genauer zu erläuternde Maßnahmen zusammengeschaltet sind. Jede Federanordnung 1,2 besteht als Hauptkomponenten aus einem hydraulischen Federbein 4, einem mit diesem hydraulisch verbundenen, hydropneumatischen Federspeicher 6 sowie einem zwischen dem Federbein 4 und dem Federspeicher 6 angeordneten Dämpfungsventil 8.

Jedes Federbein 4 besteht in an sich bekannter Weise aus einem ein Hydraulikmedium enthaltenden Zylinder 10 und einem darin zum Ein- und Ausfedern beweglich geführten Kolben 12, und der Kolben 12 trennt innerhalb des Zylinders 10 einen einer Kolbenstange 14 abgekehrten Zylinderraum 16 von einem die Kolbenstange 14 umschließenden Ringraum 18. Das jeweilige Federbein 4 wird in einem Fahrzeug zur Rad- bzw. Achsabstützung zwischen einer ungefederten Masse (Rad) und einer gefederten Masse (Rahmen) angeordnet. Hierdurch wird beim Einfedern das Hydraulikmedium aus dem Zylinderraum 16 in den jeweils zugehörigen Federspeicher 8 verdrängt, und beim Ausfedern strömt das Hydraulikmedium dann entsprechend zurück. Aufgrund einer gegensinnigen Volumenänderung des Ringraums 18 tritt hier eine jeweils umgekehrte Strömung auf, wobei das dem jeweils verschobenen Kolbenstangenvolumen entsprechende Differenzvolumen des Hydraulikmediums jeweils im Federspeicher 6 kompensiert wird. Hierbei wird von dem Federspeicher 6 eine entsprechende Federkraft bzw. Tragkraft des Federbeins 4 bewirkt.

Jedes Federbein 4 weist zwei Hydraulikanschlüsse auf, und zwar einen in den Zylinderraum 16 mündenden Anschluß A und einen in den Ringraum 18 mündenden Anschluß B. Der Anschluß A des Zylinderraums 16 ist über das Dämpfungsventil 8 mit dem Federspeicher 6 verbunden.

Demgegenüber ist nun in den Ausführungsformen nach Fig. 1 bis 4 erfindungsgemäß der Ringraum 18 jedes Federbeins 4 über den Anschluß B direkt, d.h. "an dem Dämpfungsventil 8 vorbei", mit demselben Federspeicher 6 wie der Zylinderraum 16 verbunden. Hierbei ist es vorteilhaft, wenn die hierzu vorgesehene Leitungsverbindung einen möglichst geringen Strömungswiderstand aufweist. Dies begünstigt den eingangs bereits erläuterten, im dynamischen Ausfederungszustand auftretenden Druckunterschied zwischen dem Zylinderraum 16 und dem Ringraum 18.

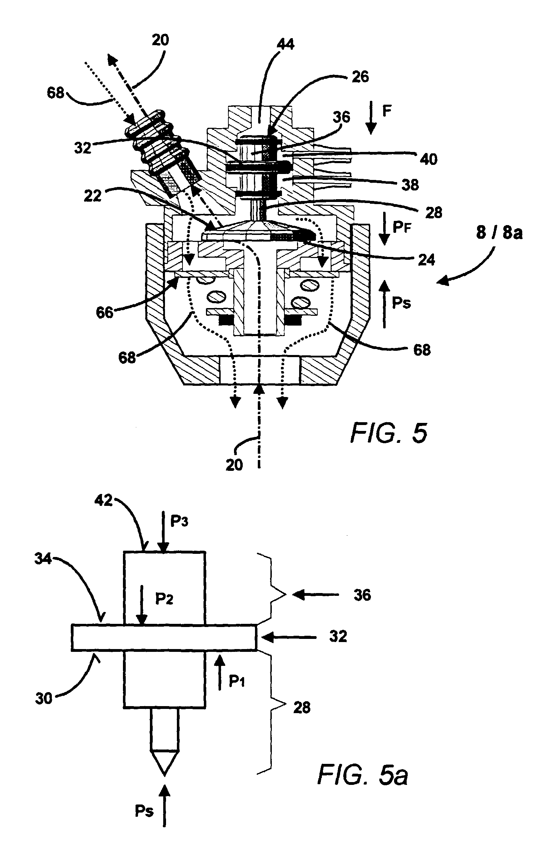

Vorzugsweise ist das bzw. jedes Dämpfungsventil 8 - siehe Fig. 5 - derart ausgebildet, daß die beim Ausfedern des Federbeins 4 auftretende Hydraulik-Ausfederungsströmung vom Federspeicher 6 in Richtung des Federbeins 4 über einen - in Fig. 5 strichpunktiert veranschaulichten - Strömungsweg 20 des Dämpfungsventils 8 geführt und hierbei dadurch gedämpft wird, daß der Strömungsweg 20 mittels eines Ventilelementes 22 ständig alternierend geschlossen und wieder geöffnet wird. Hierzu wirkt das Ventilelement 22 mit einem Ventilsitz 24 rückschlagventilartig zusammen. Das Ventilelement 22 ist dabei einerseits in seiner Öffnungsrichtung mit dem hydraulischen Druck p_{S} des Federspeichers 6 und andererseits in seiner Schließrichtung mit dem hydraulischen Druck p_{F} des Zylinderraums 16 des Federbeins 4 sowie vorzugsweise zusätzlich mit einer federelastischen, insbesondere variablen Schließkraft F derart beaufschlagt, daß das Ventilelement 22 bei Auftreten einer Ausfederungsströmung den Strömungsweg 20 selbsttätig, differenzdruckgesteuert schließt und öffnet. Dies geschieht, indem das Ventilelement 20 bei Gleichgewicht der beiden hydraulischen Drücke p_{S} und p_{F} oder bei einem bestimmten, relativ geringen Betrag einer Druckdifferenz schließt und bei einer in geschlossenem Zustand aufgrund eines dadurch bedingten Abfalls des innerhalb des Zylinderraums 16 des Federbeins 4 herrschenden Druckes p_{F} zunehmenden Druckdifferenz öffnet, und zwar bei Erreichen eines vorbestimmten bzw. variablen Betrages dieser Druckdifferenz. In diesem Zusammenhang wird nochmals auf die oben erwähnten Veröffentlichungen verwiesen, insbesondere auf die DE 42 42 534.

Zur Variation der Dämpfungscharakteristik ist die federelastische Schließkraft F vorzugsweise variabel. Hierzu weist das bzw. jedes Dämpfungsventil 8 einen in Schließrichtung des Ventilelementes 22 auf dieses wirkendenden, mit Steuerdruck beaufschlagbaren Steuerstößel 26 auf (s. insbesondere Fig. 5 und 5a).

In einer in den Zeichnungsfiguren nicht erkennbaren Weiterbildung der Erfindung ist ein das Ventilelement 22 überbrückender Bypass vorgesehen, der insbesondere als ein sich durch das Ventilelement 22 erstreckender Durchgangskanal ausgebildet ist, der hierbei vorzugsweise durch den Steuerstößel 26 geschlossen bzw. geöffnet werden kann. Zu dieser vorteilhaften Maßnahme wird insbesondere auf die Veröffentlichungen DE 42 42 534 und DE 43 14 021 verwiesen.

Wie sich weiterhin aus Fig. 5 und 5a ergibt, ist der Steuerstößel 26 bevorzugt als Stufenkolben ausgebildet, wobei dieser Stufenkolben eine dem Ventilelement 22 zugekehrte und vom hydraulischen Druck p_{F} des Federbein-Zylinderraums 16 beaufschlagte erste Stufe 28, eine an diese anschließend über eine erste Ringstufe 30 querschnittsvergrößerte zweite Stufe 32 sowie eine an diese anschließend über eine zweite Ringstufe 34 querschnittsverkleinerte dritte Stufe 36 aufweist (s. hierzu auch Fig. 5a). Die zweite Stufe 32 ist auf der Seite der ersten Ringstufe 30 und einer dort gebildeten ersten Steuerdruckkammer 38 mit einem ersten Steuerdruck p₁ beaufschlagbar. Auf der Seite der zweiten Ringstufe 34 ist eine zweite Steuerdruckkammer 40 gebildet, die mit einem zweiten Steuerdruck p₂ beaufschlagbar ist. Schließlich ist die dritte Stufe 36 auf ihrer der zweiten Stufe 32 abgekehrten Stirnseite 42 und einer dort gebildeten dritten Steuerdruckkammer 44 mit einem dritten Steuerdruck p₃ beaufschlagbar. Hierbei sind die jeweiligen Steuerdruckkammern 38,40,44 über Dichtungselemente des Steuerstößels 26 voneinander druckmäßig getrennt.

Bezüglich der Beschaltung der Steuerdruckkammern 38,40,44 gibt es nun zahlreiche verschiedene Möglichkeiten, von denen im folgenden zwei Möglichkeiten beispielhaft erläutert werden sollen. Gemäß Fig. 1 wird als zweiter und dritter Steuerdruck p₂, p₃ der in einem speziellen Druckspeicher 46 gekammerte, statische Druck des jeweils zugehörigen Federbein-Zylinderraums 16 verwendet. Hierzu ist zwischen dem Zylinderraum 16 und dem Druckspeicher 46 ein Schaltventil 48 angeordnet, welches in der statischen Lage des Federbeins 4 einmal kurzzeitig durchgeschaltet wird, um so den statischen Druck in den Druckspeicher 46 einzuleiten. Nachfolgend wird das Schaltventil 48 geschlossen. Der Druckspeicher 46 ist direkt mit der zweiten und dritten Steuerdruckkammer 40,44 verbunden. Dabei ist vorzugsweise die erste Steuerdruckkammer 38 direkt mit dem Federbein-Zylinderraum 16 verbunden, so daß als erster Steuerdruck p₁ der dynamische Druck des Federbein-Zylinderraums 16 wirkt. Hierdurch treten im dynamischen Zustand insbesondere beim Ausfedern Druckdifferenzen zwischen dem ersten Steuerdruck p₁ einerseits und dem zweiten und dritten Steuerdruck p₂, p₃ andererseits auf, wodurch über den Steuerstößel 26 die Dämpfungscharakteristik des Dämpfungsventils 8 beeinflußt wird.

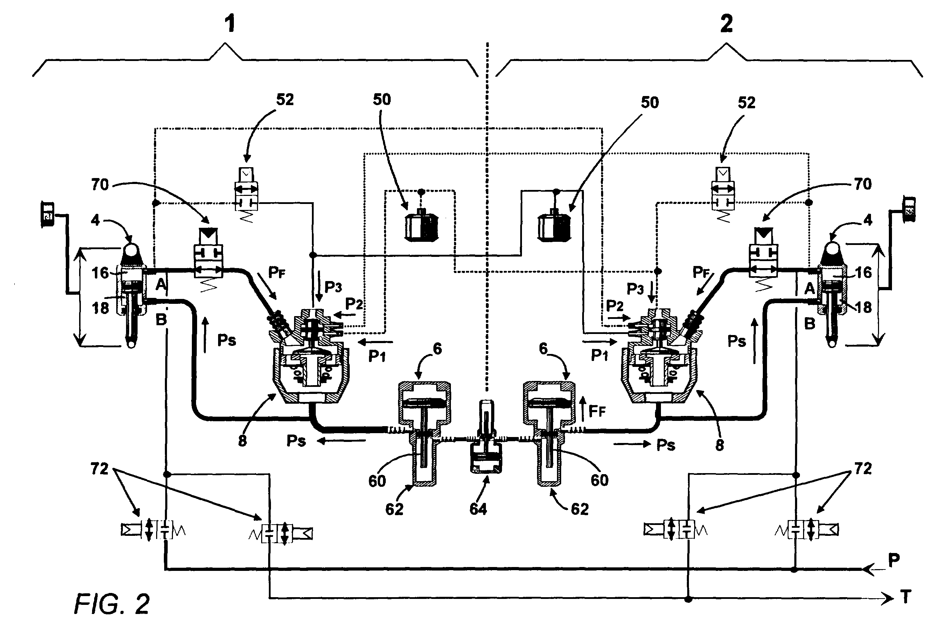

In den Ausführungsformen nach Fig. 2, 3 und 4 ist zur Stabilisierung eines Fahrzeugs gegen Wank- und/oder Nickbewegungen vorgesehen, daß die (mindestens) zwei Federanordnungen 1,2 durch "Über-Kreuz-Schaltung" der Steuerdrücke p₁,p₂,p₃ zusammenwirken. Hierzu wird bevorzugt bei jedem Dämpfungsventil 8 als erster Steuerdruck p₁ der in einem Druckspeicher 50 gekammerte, statische Druck des jeweils anderen, gegenüberliegenden Federbein-Zylinderraums 16 verwendet. Als zweiter Steuerdruck p₂ dient über eine direkte Verbindung der dynamische Druck des jeweils anderen Federbein-Zylinderraums 16. Schließlich wird als dritter Steuerdruck p₃ der in dem jeweils gegenüberliegenden "Statik-Druckspeicher" 50 gekammerte, statische Druck des jeweils zugehörigen Federbein-Zylinderraums 16 verwendet. Ähnlich der Ausführungsform nach Fig. 1 ist jedem Druckspeicher 50 ein Schaltventil 52 vorgeordnet, um den jeweiligen statischen Druck kurzzeitig in den Druckspeicher 40 einzuleiten und so zu kammern.

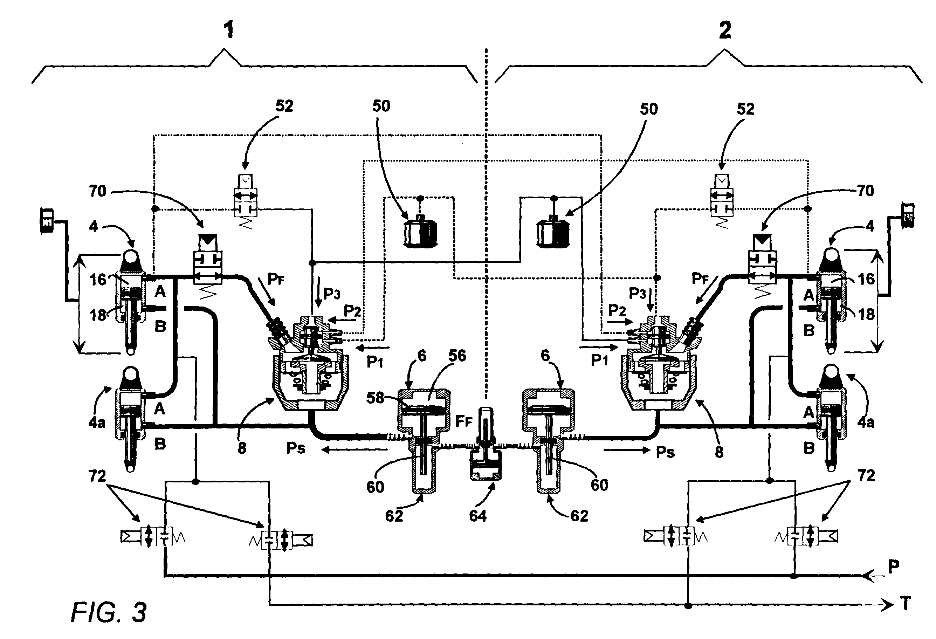

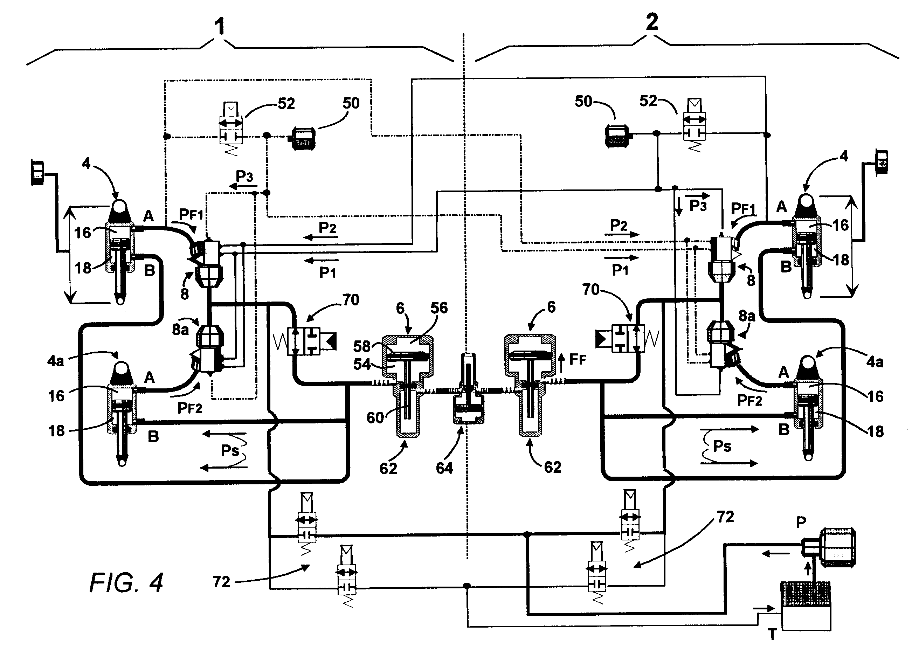

Bei den Ausführungsformen nach Fig. 3 und 4 sind innerhalb jeder Federanordnung 1,2 mindestens zwei hydraulisch parallel geschaltete Federbeine 4,4a vorgesehen. Auf diese Weise läßt sich durch Parallelschaltung jeweils von zwei Federbeinen 4,4a eine sog. Pendelachse realisieren. Eine nicht dargestellte Parallelschaltung von jeweils drei Federbeinen führt zu einer sogenannten "Triple-Achse". Hierbei erfolgt zwischen den Federbeinen stets ein Druckausgleich, wodurch bewirkt wird, daß alle Räder gleichmäßig auf dem Boden gehalten werden. Gemäß Fig. 3 sind hierzu einerseits die Zylinderräume 16 und andererseits die Ringräume 18 der Federbeine 4,4a jeweils direkt miteinander verbunden, wobei die Zylinderräume 16 über das gleiche Dämpfungsventil 8 mit dem Federspeicher 6 verbunden sind. Auch hierbei sind erfindungsgemäß die Ringräume 18 direkt, "an dem Dämpfungsventil 8 vorbei" mit dem Federspeicher 6 verbunden. Da bei dieser Ausführungsform nach Fig. 3 möglicherweise ungedämpfte Schwingungen zwischen den parallelgeschalteten Federbeinen 4,4a auftreten können, ist vorteilhafterweise in der Ausführungsform nach Fig. 4 vorgesehen, daß die Ringräume 18 der Federbeine 4,4a direkt miteinander und mit dem Federspeicher 6 verbunden sind, während jedem Zylinderraum 16 ein eigenes Dämpfungsventil 8,8a zugeordnet ist und die Dämpfungsventile 8,8a anderseitig miteinander und mit dem Federspeicher 6 verbunden sind. Hierdurch liegen vorteilhafterweise in der Verbindung zwischen den Zylinderräumen 16 stets die beiden Dämpfungsventile 8,8a, so daß Resonanzschwingungen wirksam vermieden werden. Vorzugsweise sind hierbei die beiden Dämpfungsventile 8,8a bezüglich der Steuerdrücke p₁,p₂,p₃ parallel geschaltet, d.h. sie weisen die gleiche Steuerdruck-Beschaltung auf.

Bei der Schaltung nach Fig. 4 können die hydraulischen Drücke p_{F} der über die beiden Dämpfungsventile 8,8a zusammengeschalteten Federbeine 4,4a zeitweise voneinander abweichen, weshalb sie in Fig. 4 mit unterschiedlichen Kennzeichnungen p_{F1} und p_{F2} bezeichnet sind. Hieraus wird deutlich, daß eine gewollte "Verstimmung" des grundsätzlich schwingungsfähigen Systems durch die Zwischenschaltung der Dämpfungsventile 8,8a erreicht wird.

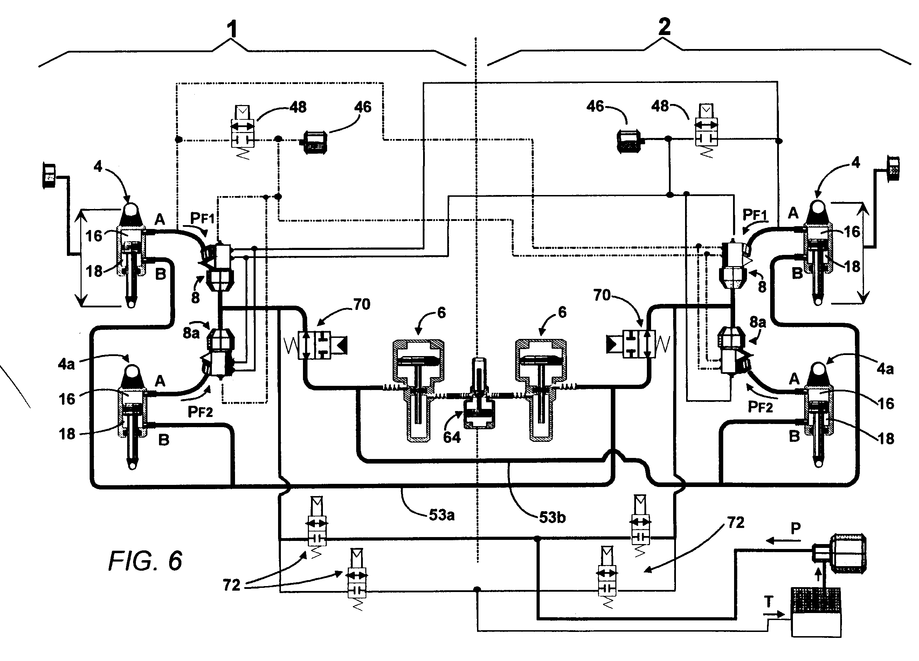

Die in Fig. 6 dargestellte Ausführungsform des erfindungsgemäßen Federungssystems entspricht weitgehend der Ausführung nach Fig.4. Ein wichtiger Unterschied besteht aber darin, daß gemäß Fig.6 jeweils der Ringraum 18 jedes Federbeins 4, 4a der einen Federanordnung 1 bzw. 2 direkt über eine von zwei Über-Kreuz-Verbindungen 53a,53b mit dem Federspeicher 6 der anderen Federanordnung 2 bzw. 1 verbunden ist. Durch diese Maßnahme wird eine besonders effektive Stabilisierung erreicht, was weiter unten noch genauer erläutert wird. Daher ist diese Ausführung besonders gut für Fahrzeuge mit hohen und/oder schweren Aufbauten geeignet, wie z.B. für Betonmischer, Kies-LKW und dergleichen.

Bevor die Wirkungsweise der einzelnen Schaltungsvarianten noch kurz erläutert wird, sollen im folgenden einige zusätzliche Schaltungsmerkmale und besondere Weiterbildungen erläutert werden.

In allen Ausführungen ist jeder Federspeicher 6 bevorzugt als Kolbenspeicher mit einem einen hydraulisch mit dem Federbein 4 verbundenen Speicherraum 54 von einer ein kompressibles Medium, insbesondere Gas, enthaltenden Federkammer 56 trennenden Trennkolben 58 ausgebildet, wobei der Trennkolben 58 vorzugsweise mit einer aus dem Kolbenspeicher nach außen geführten Trennkolbenstange 60 verbunden ist. Aufgrund der Trennkolbenstange 60 besitzt der Trennkolben 58 zwei unterschiedlich große druckbeaufschlagte Flächen, so daß er als Druckwandler derart wirkt, daß der hydraulische Druck stets größer als der pneumatische Druck ist. Hierbei ist es vorteilhaft, zur Beeinflussung der Federungscharakteristik den Trennkolben 58 über die Trennkolbenstange 60 mit einer Zusatz-Federkraft F_{F} zu beaufschlagen. Diese Zusatz-Federkraft F_{F} wird in den dargestellten, bevorzugten Ausführungsformen der Erfindung von einem auf die Trennkolbenstange 60 wirkenden Druckmittelzylinder 62 erzeugt, indem der Druckmittelzylinder 62 mit einem einen insbesondere hydraulischen Vorspanndruck erzeugenden Speicher 64 verbunden ist. Vorzugsweise ist hierbei die Trennkolbenstange 60 nach Art eines Tauchkolbens (Plunger) in den Druckmittelzylinder 62 geführt, so daß sie durch die Beaufschlagung mit dem Druck des Speichers 64 mit einer in Richtung des Trennkolbens 58 wirkenden Kraft F_{F} beaufschlagt wird, die somit in Richtung der vom hydraulischen Druck bewirkten Kraft wirkt. Somit hat die Zusatz-Federkraft die Tendenz, das Volumen der Federkammer 56 zusätzlich zu verkleinern bzw. zu komprimieren. Zu diesem Merkmalskomplex wird ergänzend auch auf die Veröffentlichung DE 42 34 217 A1 Bezug genommen.

Als weitere Stabilisierungsmaßnahme ist nun ferner bevorzugt vorgesehen, daß (mindestens) zwei Federanordnungen 1,2 dadurch zusammengeschaltet sind, daß die ihren Federspeichern 6 zur Erzeugung der Zusatz-Federkraft F_{F} zugeordneten Druckmittelzylinder 62 mit dem gleichen Vorspanndruck-Speicher 64 verbunden sind. Hierzu wird in vollem Umfang auf das DE-GM 94 07 167 verwiesen.

Die insbesondere zur Stabilisierung jeweils zusammengeschalteten bzw. zusammenwirkenden Federanordnungen 1,2 bzw. deren Federbeine 4 können in einem Fahrzeug auf gegenüberliegenden Fahrzeugseiten (links/rechts) an einer (der gleichen) Achse angeordnet sein. Ferner besteht die Möglichkeit, daß diese Federbeine 4 der zusammengeschalteten Federanordnungen 1,2 auf der gleichen Fahrzeugseite an verschiedenen Achsen angeordnet sind. Schließlich besteht auch die Möglichkeit, die Federbeine der zusammenwirkenden Federanordnungen 1,2 auf gegenüberliegenden Fahrzeugseiten und an verschiedenen Achsen anzuordnen (Über-Kreuz-Anordnung).

Wie am besten in Fig. 5 zu erkennen ist, ist in allen Ausführungsformen zu dem die Ausfederungsströmung führenden Strömungsweg 20 und dem Ventilelement 22 jedes Dämpfungsventils 8,8a ein hinsichtlich der Strömungsrichtung gegensinnig wirkendes Rückschlagventil 66 hydraulisch parallel geschaltet. Dieses Rückschlagventil 66 öffnet im wesentlichen ohne Drosselwirkung bei Auftreten einer Einfederungsströmung vom Federbein-Zylinderraum 16 zum Federspeicher 6, und es schließt bei einer umgekehrten Ausfederungsströmung, so daß dann in der oben beschriebenen Weise das Ventilelement 22 im Strömungsweg 20 zwecks Dämpfung wirkt ("Stotterdämpfung"). In Fig. 5 ist die Einfederungsströmung über das Rückschlagventil 66 durch gestrichelte Linien 68 veranschaulicht.

In einer weiteren Ausgestaltung der Erfindung, die in allen Fig.1 bis 4 sowie 6 veranschaulicht ist, ist die Verbindung zwischen jedem Federbein-Zylinderraum 16 und dem zugehörigen Federspeicher 6 mittels eines Blockierventils 70 absperrbar. Zudem ist vorzugsweise der Zylinderraum 16 jedes Federbeins 4,4a über eine aus einer bestimmten Ventilanordnung bestehende Nivelliereinrichtung 72 wahlweise mit einer hydraulischen Druckleitung P oder einer Tank-Rücklaufleitung T verbindbar. Dies dient insbesondere dazu, das statische Niveau der Federbeine 4,4a einzustellen.

Es folgen nun noch einige Bemerkungen zur Funktionsweise des erfindungsgemäßen Federungssystems.

Durch die erfindungsgemäße "Ringraum-Beschaltung" der Federbeine 4,4a tritt insbesondere aufgrund der speziellen Wirkungsweise der Dämpfungsventile 8,8a im dynamischen Zustand während des Ausfederns ein Druckunterschied zwischen dem Zylinderraum 16 und dem Ringraum 18 auf, und zwar sinkt der Druck im Zylinderraum 16 unter den im Ringraum 18 wirkenden Speicherdruck ab. Hierdurch wird ein zu starkes Ausfedern verhindert. Dieser Effekt wird zudem noch durch die spezielle Steuerdruck-Beschaltung des Dämpfungsventils 8,8a unterstützt.

Bei den Ausführungsformen nach Fig.2 bis 4 und 6 mit "Über-Kreuz-Schaltung" der Steuerdrücke kann eine effektive Stabilisierung eines Fahrzeuges insbesondere gegen seitliche Wankbewegungen erreicht werden. Beispielsweise bei einer Fahrt durch eine Linkskurve federt das rechte Federbein 4 ein, während das linke Federbein 4 die Tendenz hat, auszufedern. Dieser Ausfederungsbewegung wird durch die Erfindung effektiv entgegengewirkt, und zwar insbesondere dadurch, daß der erhöhte Druck der rechten Seite als Steuerdruck auf der linken Seite verwendet wird, so daß das Ventilelement 22 des dortigen Dämpfungsventils 8 mit einer höheren "Zuhaltekraft" beaufschlagt wird. Hierdurch wird die Dämpfung verstärkt, so daß der Druckunterschied zwischen Zylinderraum 16 und Ringraum 18 vergrößert wird.

Bei der Ausführungsform nach Fig. 3 ist die Funktionsweise wie folgt. Federt beispielsweise das linke Federbein 4 ein, so wird aus dessen Zylinderraum 16 Hydraulikmedium verdrängt. Dieses fließt dann über das Dämpfungsventil 8 in den zugehörigen (linken) Federspeicher 6. Da hierbei der Ringraum 18 des Federbeins 4 größer wird, fließt auch Hydraulikmedium aus dem Speicher 6 direkt und im wesentlichen ohne Strömungsverluste in den Ringraum 18. Somit verbleibt in dem Federspeicher 6 ein Restvolumen, welches dem "verdrängten Kolbenstangenvolumen" entspricht. Hierdurch wird im Federspeicher 6 der Trennkolben 58 in Richtung der Federkammer 56 verschoben, wodurch der pneumatische Druck steigt und somit auch der hydraulische Druck. Dieser höhere Druck tritt somit auch in dem zweiten, parallel geschalteten Federbein 4a auf. Somit steigt auch hier die Tragkraft an, so daß dieses Federbein 4a ausfedert. Hierdurch muß in dessen Zylinderraum 16 Hydraulikmedium einströmen, und aus dem Ringraum 18 wird Hydraulikmedium verdrängt. Das aus dieser Bewegung des zweiten Federbeins 4a resultierende Differenzvolumen wird ebenfalls aus dem zugehörigen Federspeicher 6 gespeist. Dieser Wechsel der Hydraulikvolumina zwischen den beiden hydraulisch miteinander gekoppelten Federbeinen 4, 4a und dem zugehörigen Federspeicher 6 geschieht sehr schnell. Hierdurch ist gewährleistet, daß sich die Drücke im System ausgleichen, so daß zu jedem Zeitpunkt einer Federbewegung die Drücke in den beiden Federbeinen 4,4a und somit auch die Tragkräfte beider Federbeine gleich sind.

Der gleiche Vorgang - allerdings mit entsprechend umgekehrter Strömungsrichtung - läuft auch ab, wenn eines der Federbeine 4, 4a ausfedert.

Der Hydraulik-Austausch zwischen den beiden parallelgeschalteten Federbeinen 4,4a und dem zugehörigen Federspeicher 6 ist von der Fahrgeschwindigkeit des Fahrzeuges abhängig. Bei geringer Geschwindigkeit ist beispielsweise beim Überfahren eines Hindernisses auch die Hubbewegung eines Federbeins relativ langsam. Die auf den Fahrzeugrahmen wirkende Kraftänderung pro Zeit ist relativ klein. Somit ist auch die Beschleunigungskraft, die das Fahrzeug der Hubbewegung entgegensetzt, relativ klein. Das Fahrzeug kann sich dann ohne wesentliche Kraftänderung anheben. Wie bereits beschrieben, gleicht sich der Hydraulikdruck zwischen den einzelnen Räumen der beiden Federbeine 4,4a aus. Die Folge dieses Ausgleichs ist, daß bei langsamer Geschwindigkeit praktisch nur ein Hydraulikausgleich zwischen den Federbeinen 4,4a stattfindet, wobei das Fahrzeug lediglich eine Hubbewegung macht, die die Hälfte der Höhe (bei Sinusform) des jeweiligen Hindernisses ist. Auf den Rahmen des Fahrzeuges wirken keine nennenswerten Zusatzkräfte durch das Überfahren des Hindernisses. Bei hoher Fahrgeschwindigkeit entstehen Beschleunigungskräfte durch das Fahrzeug. Das Fahrzeug setzt der Hubbewegung eine Kraft entgegen. Jetzt erfolgt nicht nur ein Hydraulikausgleich zwischen den beiden parallelgeschalteten Federbeinen 4,4a, sondern es wird auch Hydraulikmedium in den zugehörigen Federspeicher 6 verdrängt. Die Hubbewegung des Fahrzeugs wird kleiner, jedoch die Drücke in den beiden Federbeinen werden größer, allerdings wiederum in beiden Federbeinen gleich groß. Durch den Druckausgleich und den dadurch bewirkten Lastausgleich zwischen den beiden Federbeinen 4,4a wirkt somit an der Anbindungsstelle jedes Federbeins an den Rahmen vorteilhafterweise nicht die volle Kraft - durch die Fahrzeugbeschleunigung nach oben - sondern lediglich die halbe Kraft, da sich die Kräfte gleichmäßig auf beide Federbeine 4,4a verteilen. Demgegenüber würde bei einer Einzelradfederung die volle Beschleunigungskraft örtlich an der Anbindungsstelle des Federbeins in den Rahmen eingeleitet.

Der Einfluß des Dämpfungsventils 8 beim Ausfederungsvorgang ist nun derart, daß "oberhalb" der statischen Lage die Regelung des Steuerstößels 26 praktisch "ausgeschaltet" ist, so daß im wesentlichen nur das Ventilelement 22 als Regelelement aktiv ist. Das Ventilelement 22 spricht als Regelelement auf die Strömungsgeschwindigkeit des Hydraulikmediums an, und somit auch auf die Ausfederungsgeschwindigkeit des jeweiligen Federbeins 4, 4a. Wird die Ausfederungsgeschwindigkeit zu hoch, so zieht sich das Ventilelement 22 bedingt durch die Strömungsgeschwindigkeit gegen den Ventilsitz 24. Hierdurch wird der Weg vom Druckspeicher zum Federbein unterbrochen. Der Druck im Zylinderraum 16 fällt stark ab. Es entsteht hierdurch ein hoher Druckunterschied zwischen dem Zylinderraum 16 und dem Speicherdruck. Ist ein bestimmter Druckunterschied erreicht, so öffnet das Ventilelement 22 wieder, und dieser Regelvorgang startet erneut. Einerseits durch den starken Druckabfall im Zylinderraum 16 und andererseits durch die oben beschriebene "Bremskraft" aufgrund der speziellen "Ringraum-Beschaltung" wird die Ausfederungsgeschwindigkeit des Federbeins oberhalb der statischen Lage so dosiert gebremst, daß es zwar zügig, aber nicht zu schnell ausfedert.

In Ausfederungsrichtung "unterhalb" der statischen Lage ist dann auch der Steuerstößel 26 als zusätzliches Regelelement aktiv. Hierdurch wird die Druckabsenkung im Zylinderraum 16 gegenüber dem Speicherdruck noch wesentlich vergrößert. Diese stärkere Druckabsenkung führt dazu, daß auch der Druckunterschied zwischen Zylinderraum 16 und Ringraum 18 noch größer wird. Hierdurch wird die Ausfederung unterhalb der statischen Lage stärker gebremst als oberhalb der statischen Lage. Das Rad wird hierdurch nicht so stark durch die Federkraft in eine Bodensenke hineingeschoben, da die insgesamt wirkende Federkraft ja "Zylinderraumkraft" minus "Ringraumkraft" ist.

Gemäß Fig. 3 wird auch ein stabilisiertes Seitenwankverhalten erreicht. Hierzu hat der beschriebene Ausfederungsvorgang unterhalb der statischen Lage den wesentlichen Stabilisierungseffekt. Beim Wanken federt die eine Seite des Fahrzeugs ein und die andere federt aus. Die Einfederungsseite folgt beim Einfedern der Federkennlinie des Federspeichers 6. Demgegenüber wird auf der Ausfederungsseite einerseits durch das Dämpfungsventil 8 der Druck im Zylinderraum 16 extrem stark abgesenkt, und andererseits bewirkt der gegenüber dem Druck im Zylinderraum 16 höhere Druck im Ringraum 18, daß das Fahrzeug auf der Ausfederungsseite mit einer bestimmten "Ringraumkraft" praktisch festgehalten wird. Die Wirkungsweise des Dämpfungsventils 8 ist so ausgelegt, daß die Ringraumkraft nicht so groß werden kann, daß diese die Achse bei einer Kurvenfahrt abheben kann. Aus diesem Grund ist vorteilhafterweise mit dieser Schaltung - trotz der höheren Stabilisierung - ein Fahren im Gelände möglich.

Die Ausführung nach Fig. 4 unterscheidet sich von der Fig. 3 dadurch, daß in der jeweiligen Verbindung zwischen den Zylinderräumen 16 der zusammengeschalteten Federbeine 4,4a die beiden Dämpfungsventile 8,8a angeordnet sind. Es wurde oben bereits erläutert, daß hierdurch ungedämpfte Schwingungen zwischen den beiden Federbeinen 4,4a vermieden werden.

Bei der Ausführung nach Fig. 6 wird durch die "Über-Kreuz-Schaltung" der Ringraum-Speicher-Verbindungen 53a,53b eine äußerst "straffe" Stabilisierung dadurch erreicht, daß bei Kipp- oder Wankbewegungen jeweils auf der Ausfederseite eine Erhöhung des Druckes im Ringraum 18 sowie im Zylinderraum 16 aufgrund der Wirkungsweise des jeweiligen Dämpfungsventils 8,8a ein geringer Druck auftreten. Dieser Druckunterschied wirkt dem Ausfedern entgegen, indem das Federbein 4,4a die Tendenz hat, sich "zusammenzuziehen" bzw. einzufedern. Auf der gegenüberliegendenden Einfederseite tritt eine genau umgekehrte Wirkung auf, so daß insgesamt sehr deutlich der jeweiligen Fahrzeug-Neigung entgegengewirkt wird.

In allen dargestellten Ausführungen können vorteilhafterweise aufgrund der Blockierventile 70 einerseits die Federbeine gemeinsam oder einzeln blockiert werden, und andererseits können vorteilhafterweise auch die Achsen in Richtung Fahrzeugrahmen eingezogen werden. Dieser Vorgang läuft wie folgt ab. Die Blockierventile 70 werden insbesondere hydraulisch in ihre Sperrstellung geschaltet. Hierdurch wird die Verbindung vom Zylinderraum 16 zum Federspeicher 6 gesperrt, so daß kein Hydraulikmedium mehr zwischen Federbein und Speicher ausgetauscht werden kann. Nun werden die Ventile der Nivelliereinrichtung 72 so geschaltet, daß die Zylinderräume 16 mit der Tank-Rücklaufleitung T verbunden sind. Das Hydraulikmedium kann hierdurch aus den Zylinderräumen 16 zum Tank abfließen. Die Ringräume 18 sind erfindungsgemäß auch in der Sperrstellung der Blockierventile 70 noch mit dem Federspeicher 6 verbunden, so daß nach wie vor in den Ringräumen 18 der Druck des jeweiligen Federspeichers 6 herrscht. Durch die Verbindung der Zylinderräume 16 mit dem Tank ist hier der Druck praktisch gleich Null. Hierdurch kann der im Ringraum 18 wirkende Speicherdruck die Achse bzw. das Rad anheben, wobei das Hydraulikmedium aus den Zylinderräumen zum Tank verdrängt wird. Bei dieser Maßnahme sind die Federbeine in ihrer Dimensionierung insbesondere bezüglich der Abmessungen des Ringraumes 18 auf die jeweiligen Fahrzeugverhältnisse abzustimmen. Die vom Ringraum 18 her druckbeaufschlagte Fläche des Kolbens 12 muß jedenfalls so groß sein, daß der Speicherdruck mal druckbeaufschlagte Fläche eine Kraft erzeugt, die das jeweilige Achse- bzw. Radgewicht anheben kann.

## Patentansprüche

1. Hydropneumatisches Federungssystem, insbesondere zur Radabstützung bei Kraftfahrzeugen, mit mindestens einer Federanordnung (1, 2), die mindestens ein hydraulisches Federbein (4,4a), mindestens einen hydropneumatischen Federspeicher (6) und mindestens ein Dämpfungsventil (8,8a) umfaßt, wobei das Federbein (4, 4a) aus einem ein Hydraulikmedium enthaltenden Zylinder (10) und einem darin zum Ein- und Ausfedern beweglich geführten Kolben (12) besteht und der Kolben (12) einen Zylinderraum (16) von einem eine Kolbenstange (14) umschließenden Ringraum (18) trennt, und wobei der Zylinderraum (16) über das Dämpfungsventil (8,8a) zur Erzeugung einer Federkraft mit dem Federspeicher (6) verbunden ist, wobei das Dämpfungsventil (8,8a) derart ausgebildet ist, daß eine beim Ausfedern des Federbeins (4,4a) auftretende und über einen Strömungsweg (20) des Dämpfungsventils (8,8a) geführte Hydraulik-Ausfederungsströmung dadurch gedämpft wird, daß der Strömungsweg (20) mittels eines Ventilelementes (22) ständig alternierend geschlossen und wieder geöffnet wird, und wobei das Ventilelement (22) zur Variation der Dämpfungscharakteristik mit Steuerdruck (p₁, p₂, p₃) beaufschlagbar ist,
**dadurch gekennzeichnet,** daß der Ringraum (18) des Federbeins (4,4a) direkt, unter Umgehung des Dämpfungsventils (8,8a) mit dem bzw. einem der die jeweilige Federkraft bewirkenden Federspeicher (6) verbunden ist, wobei als Steuerdruck (p₁/p₂,p₃) zumindest unter anderem der in einem zusätzlichen Druckspeicher (46/50) gekammerte, statische Druck des Zylinderraums (16) bzw. eines der Zylinderräume (16) verwendet wird.

2. Federungssystem nach Anspruch 1,
**dadurch gekennzeichnet**, daß das Ventilelement (22) zum Schließen und Öffnen des Strömungsweges (20) mit einem Ventilsitz (24) rückschlagventilartig zusammenwirkt, wobei das Ventilelement (22) einerseits in seiner Öffnungsrichtung mit dem hydraulischen Druck (p_{S}) des Federspeichers (6) und anderseits in seiner Schließrichtung mit dem hydraulischen Druck (p_{F}) des Zylinderraumes (16) des Federbeins (4) sowie vorzugsweise zusätzlich mit einer federelastischen Schließkraft (F) derart beaufschlagt ist, daß das Ventilelement (22) bei einer Ausfederungsströmung den Strömungsweg (20) selbsttätig schließt und öffnet, indem es bei Gleichgewicht der beiden hydraulischen Drücke (p_{S}, p_{F}) oder bei einem bestimmten, relativ geringen Betrag einer Druckdifferenz schließt und bei einer in geschlossenem Zustand aufgrund eines Abfalls des Druckes (p_{F}) innerhalb des Zylinderraums (16) dem Federbeins (4) zunehmenden Druckdifferenz bei Erreichen eines bestimmten Betrages der Druckdifferenz öffnet.

3. Federungssystem nach Anspruch 1 oder 2,
**gekennzeichnet durch** einen in Schließrichtung des Ventilelementes (22) auf dieses wirkenden, zur Variation der Dämpfungscharakteristik mit Steuerdruck (p₁, p₂, p₃) beaufschlagbaren Steuerstößel (26).

4. Federungssystem nach einem der Ansprüche 1 bis 3, **gekennzeichnet durch** einen das Ventilelement (22) überbrückenden Bypass, der insbesondere als ein sich durch das Ventilelement (22) erstreckender Durchgangskanal ausgebildet ist, wobei vorzugsweise der Steuerstößel (26) auch zum Verschließen und Öffnen des Bypasses dient.

5. Federungssystem nach Anspruch 3 oder 4,
**dadurch gekennzeichnet**, daß der Steuerstößel (26) als Stufenkolben mit einer dem Ventilelement (22) zugekehrten und vom hydraulischen Druck (p_{F}) des Federbein-Zylinderraums (16) beaufschlagten ersten Stufe (28), einer an diese anschließend über eine erste Ringstufe (30) querschnittsvergrößerten zweiten Stufe (32) sowie einer an diese anschließend über eine zweite Ringstufe (34) querschnittsverkleinerten dritten Stufe (36) ausgebildet ist, wobei die zweite Stufe (32) auf der Seite der ersten Ringstufe (30) und einer dort gebildeten ersten Steuerdruckkammer (38) mit einem ersten Steuerdruck (p₁) und auf der Seite der zweiten Ringstufe (34) und einer dort gebildeten zweiten Steuerdruckkammer (40) mit einem zweiten Steuerdruck (p₂) beaufschlagbar ist, und wobei die dritte Stufe (36) auf ihrer der zweiten Stufe (32) abgekehrten Stirnseite (42) und einer dort gebildeten dritten Steuerdruckkammer (44) mit einem dritten Steuerdruck (p₃) beaufschlagbar ist.

6. Federungssystem nach Anspruch 5,
**dadurch gekennzeichnet,** daß als zweiter und dritter Steuerdruck (p₂, p₃) der in dem zusätzlichen Druckspeicher (46) gekammerte, statische Druck des Federbein-Zylinderraums (16) verwendet wird, wobei bevorzugt die erste Steuerdruckkammer (38) direkt mit dem Federbein-Zylinderraum (16) verbunden ist, so daß als erster Steuerdruck (p₁) der dynamische Druck des Federbein-Zylinderraums (16) wirkt.

7. Federungssystem nach einem der Ansprüche 1 bis 5, **dadurch gekennzeichnet,** daß in einem Fahrzeug zum Zwecke der Stabilisierung von Wank- und/oder Nickbewegungen jeweils mindestens zwei Federanordnungen (1,2) - insbesondere durch Über-Kreuz-Schaltung der Steuerdrücke (p₁, P₂, p₃) - zusammenwirken.

8. Federungssystem nach Anspruch 7,
**dadurch gekennzeichnet,** daß der Ringraum (18) des Federbeins (4,4a) direkt mit demselben Federspeicher (6) wie der Zylinderraum (16) des gleichen Federbeins (4,4a) verbunden ist.

9. Federungssystem nach Anspruch 7,
**dadurch gekennzeichnet,** daß jeweils der Ringraum (18) des Federbeins (4,4a) der einen Federanordnung (1; 2) direkt mit dem Federspeicher (6) der anderen Federanordnung (2;1) verbunden ist.

10. Federungssystem nach einem der Ansprüche 7 bis 9, **dadurch gekennzeichnet,** daß im Falle eines paarweisen Zusammenwirkens von jeweils zwei Federanordnungen (1,2) bei jedem Dämpfungsventil (8,8a) als erster Steuerdruck (p₁) der in einem ersten zusätzlichen Druckspeicher (50) gekammerte, statische Druck des jeweils anderen Federbein-Zylinderraums (16), als zweiter Steuerdruck (P₂) über eine direkte Verbindung der dynamische Druck des jeweils anderen Federbein-Zylinderraums (16) sowie als dritter Steuerdruck (p₃) der in einem weiteren zusätzlichen Druckspeicher (50) gekammerte, statische Druck des jeweils zugehörigen Federbein-Zylinderraums (16) verwendet werden.

11. Federungssystem nach einem der Ansprüche 1 bis 10, **dadurch gekennzeichnet,** daß innerhalb der/jeder Federanordnung (1,2) mindestens zwei hydraulisch parallel geschaltete Federbeine (4,4a) vorgesehen sind.

12. Federungssystem nach Anspruch 11,
**dadurch gekennzeichnet,** daß einerseits die Zylinderräume (16) und anderseits die Ringräume (18) der Federbeine (4,4a) jeweils direkt miteinander verbunden sind, wobei die Zylinderräume (16) über das gleiche Dämpfungsventil (8) mit dem Federspeicher (6) verbunden sind.

13. Federungssystem nach Anspruch 11,
**dadurch gekennzeichnet,** daß die Ringräume (18) der Federbeine (4,4a) direkt miteinander und mit dem jeweiligen Federspeicher (6) verbunden sind, während jedem Zylinderraum (16) ein eigenes Dämpfungsventil (8,8a) zugeordnet ist und die Dämpfungsventile (8, 8a) anderseitig miteinander und mit dem Federspeicher (6) verbunden sind.

14. Federungssystem nach Anspruch 13,
**dadurch gekennzeichnet,** daß die Dämpfungsventile (8,8a) bezüglich der Steuerdrücke (p₂, p₂, p₃) parallel geschaltet sind.

15. Federungssystem nach einem der Anspüche 1 bis 14, **dadurch gekennzeichnet,** daß der/ jeder Federspeicher (6) als Kolbenspeicher mit einem einen Hydraulik-Speicherraum (54) von einer ein kompressibles Medium, insbesondere Gas, enthaltenden Federkammer (56) trennenden Trennkolben (58) und einer aus dem Kolbenspeicher geführten Trennkolbenstange (60) ausgebildet ist, wobei der Trennkolben (58) über die Trennkolbenstange (60) mit einer Zusatz-Federkraft (F_{F}) beaufschlagt wird.

16. Federungssystem nach Anspruch 15,
**dadurch gekennzeichnet,** daß die Zusatz-Federkraft (F_{F}) von einem auf die Trennkolbenstange (60) wirkenden Druckmittelzylinder (62) erzeugt wird, indem der Druckmittelzylinder (62) mit mindestens einem einen Vorspanndruck erzeugenden Speicher (64) verbunden ist.

17. Federungssystem nach Anspruch 16,
**dadurch gekennzeichnet,** daß mindestens zwei Federanordnungen (1,2) dadurch zusammengeschaltet sind, daß die ihren Federspeichern (6) zur Erzeugung der Zusatz-Federkraft (F_{F}) zugeordneten Druckmittelzylinder (62) mit dem gleichen Vorspanndruck-Speicher (64) verbunden sind.

18. Federungssystem nach einem der Ansprüche 1 bis 17, **gekennzeichnet durch** ein hydraulisch zu dem die Ausfederungsströmung führenden Strömungsweg (20) und dem Ventilelement (22) des Dämpfungsventils (8,8a) parallel geschaltetes, hinsichtlich der Strömungsrichtung gegensinnig wirkendes Rückschlagventil (66), welches bei Auftreten einer Einfederungsströmung vom Federbein-Zylinderraum (16) zum Federspeicher (6) im wesentlichen ohne Drosselwirkung öffnet und bei einer Ausfederungsströmung schließt.

19. Federungssystem nach einem der Ansprüche 1 bis 18, **dadurch gekennzeichnet,** daß die Verbindung zwischen dem/jedem Federbein-Zylinderraum (16) und dem zugehörigen Federspeicher (6) mittels eines Blockierventils (70) absperrbar ist.

20. Federungssystem nach einem der Ansprüche 1 bis 19, **dadurch gekennzeichnet,** daß der Zylinderraum (16) des/jedes Federbeins (4,4a) über eine Nivelliereinrichtung (72) wahlweise mit einer hydraulischen Druckleitung (P) oder einer Tank-Rücklaufleitung (T) verbindbar ist.

## Claims

1. Hydropneumatic suspension system, in particular for bracing the wheels of motor vehicles, with at least one suspension arrangement (1, 2) comprising at least one hydraulic shock-absorber (4, 4a), at least one hydropneumatic spring (6) and at least one damping valve (8, 8a), in which the shock-absorber (4, 4a) consists of a cylinder (10) containing a hydraulic medium and a piston (12) guided therein for the compression and rebound movements, and the piston (12) separates a cylinder volume (16) from an annular space (18) surrounding the piston rod (14), and in which the cylinder space (16) is connected via the damping valve (8, 8a) to the hydropneumatic spring (6) so as to produce a spring force, and the damping valve (8, 8a) is designed such that a hydraulic rebound flow that occurs when the shock absorber (4, 4a) rebounds passes via a flow path (20) through the damping valve (8, 8a) and is damped thereby, the flow path (20) is continually alternately closed and opened again by means of a valve element (22), and the valve element (22) can be acted upon by a control pressure (p₁, p₂, p₃) to vary the damping characteristics,
**characterised in that**
the annular space (18) of the spring strut (4, 4a) is connected directly, bypassing the damping valve (8, 8a), with the, or with one of the hydropneumatic springs (6) which produce the respective spring force, and the control pressure (p₁, p₂ p₃), at least inter alia the static pressure of the cylinder volume (16) or one of the cylinder volumes (16) contained within an additional pressure accumulator (46/50) is used.

2. Suspension system according to Claim 1,
**characterised in that**
the valve element (22) for closing and opening the flow path (20) cooperates with a valve seat (24) to form a non-return valve, such that the valve element (22) is on the one hand acted upon in its opening direction by the hydraulic pressure (p_{S}) of the hydropneumatic spring (6) and on the other hand in its closing direction by the hydraulic pressure (p_{F}) of the cylinder volume (16) of the shock-absorber (4) and preferably additionally by an elastic closing force (F) in such a way that during a read flow the valve element (22) closes and opens the flow path (20) automatically, in that when the two hydraulic pressures (pₛ, p_{F}) are in equilibrium or when there is a relatively small pressure difference it closes, but in the closed position, as the assure difference increases because the pressure (p_{F}) in the cylinder volume (16) of the shock-absorber (4) is falling, it opens when the said pressure difference has reached a certain value.

3. Suspension system according to Claims 1 or 2,
**characterised in that**
it comprises a control tappet (26) which acts upon the valve element (22) in the closing direction, and which can itself be acted upon by a control pressure (p₁, p₂, p₃) to vary the damping characteristic.

4. Suspension system according to any of Claims 1 to 3,
**characterised in that**
it comprises a bypass circumventing the valve element (22), in particular one designed as a channel extending through the valve element (22), such that the control tappet (26) preferably also serves to close off or open up the bypass.

5. Suspension system according to Claims 3 or 4,
**characterised in that**
the control tappet (26) is designed as a stepped piston with a first step (28) facing the valve element (22) and acted upon by the hydraulic pressure (p_{F}) of the shock-absorber's cylinder volume (16), this being followed by a second step (32) of larger cross-section separated from the first step by a first annular ledge (30), and this in turn being followed by a third step (36) of smaller cross-section separated from the second step by a second annular ledge (34), such that the second step (32) can be acted upon on the side of the first annular ledge (30) and in a first control pressure chamber (38) there by a first control pressure (p₁) and on the side of the second annular ledge (34) and in a second control pressure chamber (40) formed there by a second control pressure (p₂), and such that the third step (36) can be acted upon on its end face (42) facing away from the second step (32) and in a third control assure chamber (44) formed there by a third control pressure (p₃).

6. Suspension system according to Claim 5,
**characterised in that**
the static pressure of the shock-absorber's cylinder volume (16) contained in the additional pressure accumulator (46) is used as the second and third control pressures (p₂, p₃), and the first control pressure chamber (38) is preferably connected directly to the shock-absorber's cylinder volume (16), so that the dynamic pressure of the shock-absorber's cylinder volume (16) acts as the first control pressure (p₁).

7. Suspension system according to any of Claims 1 to 5,
**characterised in that**
in a vehicle, for the purpose of stabilising rolling and/or pitching movements, in each case at least two suspension arrangements (1, 2) coopenate - in particular by cross-over switching of the control pressures (p₁, p₂, p₃).

8. Suspension system according to Claim 7,
**characterised in that**
the annular space (18) of the shock-absorber (4, 4a) is connected directly to the same hydropneumatic spring (6) as the cylinder volume (16) of the same shock-absorber (4, 4a).

9. Suspension system according to Claim 7,
**characterised in that**
in each case the annular space (18) of the shock-absorber (4, 4a) of one suspension arrangement (1, 2) is connected directly to the hydropneumatic spring (6) of the other suspension arrangement (2, 1).

10. Suspension system according to any of Claims 7 to 9,
**characterised in that**
in the case of two suspension arrangements (1, 2) cooperating as a pair, at each damping valve (8, 8a) the static pressure of the respective other shock-absorber's cylinder volume (16) contained within a first additional pressure accumulator (50) is used as the first control pressure (p₁), the dynamic pressure of the respective other shock-absorber's cylinder volume (10), connected directly, is used as the second control pressure (p₂), and the static pressure of the respective associated shock-absorber's cylinder volume (16) contained within a further additional pressure accumulator (50) is used as the third control pressure (p₃).

11. Suspension system according to any of Claims 1 to 10,
**characterised in that**
within the/each suspension arrangement (1, 2) at least two shock-absorbers (4, 4a) connected hydraulically in parallel are provided.

12. Suspension system according to claim 11,
**characterised in that**
on the one hand the cylinder volumes (16) and on the other hand the annular spaces (18) of the shock-absorbers (4, 4a) are in each case connected directly to one another, such that the cylinder volumes (16) are connected to the hydropneumatic spring (6) via the same damping valve (8).

13. Suspension system according to Claim 11,
**characterised in that**
the annular spaces (18) of the shock-absorbers (4, 4a) are connected directly to one another and to the respective hydropneumatic spring (6), while a damping valve (8, 8a) of its own is associated with each cylinder volume (16) and the damping valves (8, 8a) are on the other side connected with one another and with the hydropneumatic spring (6).

14. Suspension system according to Claim 13,
**characterised in that**
the damping valves (8, 8a) are connected in parallel in relation to the control pressures (p₁, p₂, p₃).

15. Suspension system according to any of Claims 1 to 14,
**characterised in that**
the/each hydropneumatic spring (6) is designed as a piston accumulator with a separating piston (58) which separates a hydraulic accumulation chamber (54) from a spring chamber (56) containing a compressible medium, in particular a gas, and a separating piston rod (60) leading out of the piston accumulator, such that the separating piston (58) is acted upon via the separating piston rod (60) by an additional spring force (F_{F}).

16. Suspension system according to Claim 15,
**characterised in that**
the additional spring force (F_{F}) is produced by a pressure cylinder (62) acting upon the separating Piston rod (60), in that the pressure cylinder (62) is connected to at least one reservoir (64) which produces a pre-stressing pressure.

17. Suspension system according to Claim 16,
**characterised in that**
at least two suspension arrangements (1, 2) are interconnected by the fact that the pressure cylinders (62) associated with their hydropneumatic springs (6) to produce the additional spring force (F_{F}) are connected to the same pre-stressing pressure reservoir

18. Suspension system according to any of Claims 1 to 17,
**characterised in that**
it comprises a hydraulic non-return valve (66) acting in the direction opposite to the flow direction, to which the flow path (20) guiding the rebound flow and the valve element (22) of the damping valve (8, 8a) are connected in parallel, which, when a compression flow occurs from the shock-absorbers cylinder volume (16) towards the hydropneumatic spring (6), opens essentially without any throttling action and which closes when a rebound flow takes place.

19. Suspension system according to any of Claims 1 to 18,
**characterised in that**
the connection between the/each shock-absorber's cylinder volume (16) and the associated hydropneumatic spring (6) can be blocked by means of a blocking valve (70).

20. Suspension system according to any of Claims 1 to 19,
**characterised in that**
the cylinder volume (16) of the/each shock-absorber (4, 4a) can be connected via a levelling device (72) either to a hydraulic pressure line (P) or to a tank return line (T), according to choice.

## Revendications

1. Système de suspension hydropneumatique, en particulier pour l'appui d'une roue pour des véhicules automobiles, comportant au moins un dispositif à ressort (1, 2) qui comprend au moins une jambe de suspension hydraulique (4, 4a), au moins un accumulateur à ressort (6) hydropneumatique et au moins une soupape d'amortissement (8, 8a), la jambe de suspension (4, 4a) étant constituée d'un cylindre (10) contenant un fluide hydraulique, et d'un piston (12) y étant guidé avec une mobilité permettant un débattement de contraction et de déploiement élastique, et le piston (12) assurant la séparation entre une enceinte de cylindre (16) et un espace annulaire (18) entourant une tige de piston (14), l'enceinte de cylindre (16) étant reliée par la soupape d'amortissement (8, 8a) à l'accumulateur à ressort (6) en vue de générer une force élastique, la soupape d'amortissement (8, 8a) étant réalisée de manière qu'un écoulement hydraulique de déploiement élastique, qui sort lors du déploiement élastique de la jambe de suspension (4, 4a) et qui est guidé sur un chemin d'écoulement (20) de la soupape d'amortissement (8, 8a), est amorti par le fait que le chemin d'écoulement (20) est en permanence fermé et de nouveau ouvert de façon alternée au moyen d'un élément de soupape (22), l'élément de soupape (22) étant susceptible d'être sollicité par une pression de commande (p₁, p₂, p₃) pour obtenir une variation de la caractéristique d'amortissement, caractérisé en ce que l'enceinte annulaire (18) de la jambe de suspension (4, 4a) est reliée directement, en contournant la soupape d'amortissement (8, 8a), à l'accumulateur à ressort (6), respectivement l'un des accumulateurs à ressort (6) provoquant la force élastique respective, au moins entre autres la pression statique, confinée dans un accumulateur de pression supplémentaire (46/50) de l'enceinte de cylindre (16), respectivement d'une des enceintes de cylindre (16), étant utilisée à titre de pression de commande (p₁/p₂, p₃).

2. Système de suspension selon la revendication 1, caractérisé en ce que l'élément de soupape (22) coopère, à la façon d'un clapet anti-retour, avec un siège de soupape (24) pour fermer et ouvrir le chemin d'écoulement (20), l'élément de soupape (22) étant sollicité, d'une part, dans sa direction d'ouverture par la pression hydraulique (pₛ) de l'accumulateur à ressort (6) et, d'autre part, dans sa direction de fermeture par la pression hydraulique (p_{F}) de l'enceinte de cylindre (16) de la jambe de suspension (4) ainsi que, de préférence en plus, par une force de fermeture (F) ayant la caractéristique élastique d'un ressort, de manière que, lors d'un écoulement de débattement de déploiement, l'élément de soupape (22) ferme et ouvre automatiquement le chemin d'écoulement (20), dans lequel en cas d'équilibre entre les deux pressions hydrauliques (p_{S}, p_{F}) ou en cas d'une valeur relativement faible déterminée d'une différence de pression, il se ferme et, en cas d'une augmentation de la différence de pression à l'état fermé, à cause d'une chute de la pression (p_{F}) à l'intérieur de l'enceinte du cylindre (16) de la jambe de suspension (4), il s'ouvre lors de l'atteinte d'une valeur déterminée de la différence de pression.

3. Système de suspension selon la revendication 1 ou 2, caractérisé par un poussoir de commande (26) qui, dans la direction de fermeture de l'élément de soupape (22), agit sur celui-ci, et peut être sollicité par une pression de commande (p₁, p₂, p₃) dans le but d'obtenir une variation de la caractéristique d'amortissement.

4. Système de suspension selon l'une des revendications 1 à 3, caractérisé par une dérivation pontant l'élément de soupape (22), qui en particulier est réalisée sous la forme d'un canal de passage s'étendant à travers l'élément de soupape (22), le poussoir de commande (26) servant de préférence également à fermer et ouvrir la dérivation.

5. Système de suspension selon la revendication 3 ou 4, caractérisé en ce que le poussoir de commande (26) est réalisé sous la forme de piston étagé, ayant un premier étage (28) tourné vers l'élément de soupape (22) et sollicité par la pression hydraulique (p_{F}) de l'enceinte de cylindre (16) de la jambe de suspension, un deuxième étage (32) à section transversale plus grande se raccordant au premier étage par un premier étagement annulaire (30), ainsi qu'un troisième étage (36) à section transversale diminuée, se raccordant à ce deuxième étage, par l'intermédiaire d'un deuxième étagement annulaire (34), le deuxième étage (32) pouvant être sollicité par une première pression de commande (p₁), du côté du premier étagement annulaire (30) et d'une première chambre de pression de commande (38) constituée à cet endroit, et pouvant être sollicité par une deuxième pression de commande (p₂) du côté du deuxième étagement annulaire (34) et d'une deuxième chambre de pression de commande (40) constituée à cet endroit, et le troisième étage (36) pouvant être sollicité par une troisième pression de commande (p₃), sur sa face frontale (42) opposée au deuxième étagement (32) et du côté d'une troisième chambre de pression de commande (44) constituée à cet endroit

6. Système de suspension selon la revendication 5, caractérisé en ce que l'on utilise comme deuxième et troisième pressions de commande (p₂, p₃) la pression statique, confinée dans l'accumulateur de pression supplémentaire (46), de l'enceinte de cylindre (16) de jambe de suspension, la première chambre de pression de commande (38) étant de préférence directement reliée à l'enceinte de cylindre (16) de la jambe de suspension, si bien que la pression dynamique de l'enceinte de pression (18) de la jambe de suspension agit comme première pression de commande (p₁).

7. Système de suspension selon l'une des revendications 1 à 5, caractérisé en ce que dans un véhicule, dans le but d'une stabilisation des mouvements en roulis et/ou en tangage, au moins deux agencements à ressort (1, 2) coopèrent respectivement - en particulier par l'intermédiaire d'un branchement croisé des pressions de commande (p₁, p₂, p₃).

8. Système de suspension selon la revendication 7, caractérisé en ce que l'enceinte annulaire (18) de la jambe de suspension (4, 4a) est directement reliée au même accumulateur à ressort (6) que l'enceinte de cylindre (16) de la même jambe de suspension (4, 4a).

9. Système de suspension selon la revendication 7, caractérisé en ce que l'enceinte annulaire (18) de la jambe de suspension (4, 4a) d'un agencement à ressort (1; 2) respectif est directement relié à l'accumulateur à ressort (6) de l'autre agencement à ressort (2; 1).

10. Système de suspension selon l'une des revendications 7 à 9, caractérisé en ce que, dans le cas d'une coopération par paires, de deux agencements à ressort (1, 2)respectifs pour chaque soupape d'amortissement (8, 8a), est utilisée, à titre de première pression de commande (p₁), la pression statique, confinée dans un premier accumulateur de pression supplémentaire (50), de l'autre enceinte de cylindre (16) respective de la jambe de suspension, à titre de deuxième pression de commande (p₂) par une liaison directe la pression dynamique de l'autre enceinte de cylindre (16) respective de jambe de suspension, ainsi que, comme troisième pression de commande (p₃), la pression statique confinée dans un autre accumulateur de pression (50) supplémentaire de l'enceinte de cylindre (16) respective de jambe de suspension.

11. Système de suspension selon l'une des revendications 1 à 10, caractérisé en ce qu'à l'intérieur de l'agencement à ressort/de chaque agencement à ressort (1,2), sont prévus au moins deux jambes de suspension (4, 4a) branchées hydrauliquement en parallèle.

12. Système de suspension selon la revendication 11, caractérisé en ce que, d'une part, les enceintes de cylindre (16) et, d'autre part, les enceintes annulaires (18) des jambes de suspension (4, 4a) sont respectivement directement reliées ensemble, les enceintes de cylindre (16) étant reliées à l'accumulateur à ressort (6) par la même soupape d'amortissement (8).

13. Système de suspension selon la revendication 11, caractérisé en ce que les enceintes annulaires (18) des jambes de suspension (4, 4a) sont directement reliées ensemble et sont reliées à l'accumulateur à ressort (6) respectif, tandis qu'à chaque enceinte de cylindre (16) est associée une soupape d'amortissement (8, 8a) propre, et que, de l'autre côté, les soupapes d'amortissement (8, 8a) sont reliées ensemble et à l'accumulateur à ressort (6).

14. Système de suspension selon la revendication 13, caractérisé en ce que les soupapes d'amortissement (8, 8a) sont branchées en parallèle quant aux pressions de commande (p₁, p₂, p₃).

15. Système de suspension selon l'une des revendications 1 à 14, caractérisé en ce que le/chaque accumulateur à ressort (6) est réalisé sous la forme d'accumulateur à piston, avec un piston de séparation (58) assurant la séparation entre une enceinte d'accumulation hydraulique (54) et une chambre à ressort (56) contenant un milieu compressible, en particulier du gaz, et avec une tige de piston de séparation (60), guidée hors de l'accumulateur à piston, le piston de séparation (58) étant sollicité, par l'intermédiaire de la tige de piston de séparation (60), par une force élastique additionnelle (F_{F}).

16. Système de suspension selon la revendication 15, caractérisé en ce que la force élastique additionnelle (F_{F}) est générée par un cylindre à milieu sous pression (62) agissant sur la tige de piston de séparation (60), et dans lequel le cylindre à milieu sous pression (62) est relié à au moins un accumulateur (64) générant une pression de précontrainte.

17. Système de suspension selon la revendication 16, caractérisé en ce qu'au moins deux agencements à ressort (1, 2) sont branchés ensemble par le fait que les cylindres à milieu sous pression (62), associés à leurs accumulateurs à ressort (6) pour générer la force élastique d'appoint (F_{F}), sont reliés au même accumulateur de pression de précontrainte (64).

18. Système de suspension selon l'une des revendications 1 à 17, caractérisé par un clapet anti-retour (66), agissant en sens inverse du point de vue du sens d'écoulement, branché en parallèle vis-à-vis du chemin d'écoulement (20), guidant l'écoulement de déploiement élastique, et de l'élément de soupape (22) de la soupape d'amortissement (8, 8a), clapet anti-retour qui, lors de la survenance d'un écoulement de rétraction élastique allant de l'enceinte de cylindre (16) de jambe de suspension vers l'accumulateur à ressort (6), s'ouvre pratiquement sans effet d'étranglement et se ferme en cas d'écoulement dû à un débattement de déploiement élastique.

19. Système de suspension selon l'une des revendications 1 à 18, caractérisé en ce que la liaison entre la/chaque enceinte de cylindre (16) de jambe de suspension et l'accumulateur à ressort (6) afférent peut être bloqué à l'aide d'une soupape de blocage (70).

20. Système de suspension selon l'une des revendications 1 à 19, caractérisé en ce que l'enceinte de cylindre (16) de/de chaque jambe de suspension (4, 4a) peut être reliée, par un dispositif de réglage d'assiette (72), à volonté à une conduite de pression hydraulique (P) ou à une conduite de retour au réservoir (T).
